# EUROPEAN PATENT SPECIFICATION

(11) **EP 1 033 651 B1**
(45) Date of publication and mention of the grant of the patent: **23.08.2006**
(21) Application number: 00300486.8
(22) Date of filing: 24.01.2000
(51) Int. Cl.: G06F 9/45

(54) **Instruction translation method**
Befehlsübersetzungsverfahren
Méthode de traduction d'instructions

(30) Priority: 04.03.1999 GB 9904824
(43) Date of publication of application: 06.09.2000
(73) Proprietor: Fujitsu Services Limited, London, EC2A 1SL (GB)
(72) Inventor: Hughes, Kevin, Glossop, Derbyshire SK13 8RJ (GB); Eaton, John Richard, Salford M6 8EY (GB)
(74) Representative: Brandon, Paul Laurence

(56) References cited:
- EP-A- 0 706 125
- AUSLANDER J ET AL: "FAST, EFFECTIVE DYNAMIC COMPILATION" ACM SIGPLAN NOTICES, ASSOCIATION FOR COMPUTING MACHINERY, NEW YORK, US, vol. 31, no. 5, 1 May 1996 (1996-05-01), pages 149-159, XP000593201 ISSN: 0362-1340
- PRIYADARSHAN K. AND WOLFE M.: "Elimination of Redundant Array Subscript Range Checks" PROCEEDINGS OF THE ACM SIGPLAN 1995 CONFERENCE ON PROGRAMMING LANGUAGE DESIGN AND IMPLEMANTATION , vol. 30, no. 6, June 1995 (1995-06), pages 270-278, XP002258262 La Jolla CA USA
- CORAZAO M. ET AL: "Instruction Set Mapping For Performance Optimization" IEEE/ACM INTERNATIONAL CONFERENCE ON COMPUTER AIDED DESIGN 1993 ICCAD DIGEST OF TECHNICAL PAPERS, 1993, 7 - 11 November 1993, pages 518-521, XP002258263

## Description

### Background to the Invention

This invention relates to a method for translating instructions in a computer system.

The invention is particularly concerned with a computer system in which source code instructions are translated into target code instructions for execution on a particular processor. This may be required, for example, where one processor is being used to emulate another, in which case the instructions for the processor being emulated must be translated into instructions for the emulating processor.

One approach, referred to as interpretation, is to create a software model of the processor being emulated. This model operates by reading each target instruction, decoding it, and selecting one of a number of sequences that perform the same function as the instruction being emulated. This fetch/decode/execute sequence is repeated for each source code instruction in turn.

A more efficient approach is to translate a block of source code instructions, rather than a single instruction. That is, the source code is divided into blocks, and each source code block is translated into a block of target code instructions, functionally equivalent to the source code block. Typically, a block has a single entry point and one or more exit points. The entry point is the target of a source code jump, while the (or each) exit is a source code jump.

Translating blocks is potentially much more efficient, since it provides opportunities for eliminating redundant instructions within the target code block, and other optimisations. Known optimising compiler techniques may be employed for this purpose. To increase efficiency further, the target code blocks may be held in the main memory and/or a cache store, so that they are available for re-use if the same section of code is executed again, without the need to translate the block.

J. Auslander et al. ["Fast Effective Dynamic Compilation", ACM SIGPLAN Notices, Association for Computing Machinery, New York, USA, 01/05/1996, pages 149-159] describe a compilation system including both a static and a dynamic compiler. The static compiler produces pre-compiled machine-code templates whose instructions contain holes that will be filled in with run-time constant values. The static compiler also generates set-up code to calculate the values of the derived run-time constants, and directives that instruct the dynamic compiler how to produce executable code from the templates. The dynamic compiler follows the directives to copy the machine-code templates and to fill the holes with the appropriate constants.

K. Priyadarshn and M. Wolfe ["Elimination of Redundant Array Subscript Range Checks", Proceedings of the ACM SIGPLAN 1995 Conference on Programming Language Design and Implementation, La Jolla, CA, USA, June 1995, Volume 30, No. 6, pages 270-278] describe a compiler optimization algorithm to reduce the run-time overhead of array subscript range checks. A range check Ci may imply a check Cj, and therefore performing Ci makes Cj unnecessary. Redundant checks may thus be eliminated.

An object of the present invention is to provide a novel technique for improving the efficiency of block-oriented code translation.

### Summary of the Invention

According to the invention, there is provided a computer-implemented method of translating an input block of source code instructions into an output block of target code instructions, using a plurality of templates,
characterised in that each of the templates implements a respective instruction in the source code instruction set, without implementing predetermined sub-functions within that instruction,
and further characterised in that the method includes:
(a) selecting an appropriate template for each instruction in the input block and appending that template to the output block;
(b) analysing the input block to determine the net effect of the non-implemented sub-functions in the templates used in the output block; and
(c) planting code in the output block to achieve this net effect.

It can be seen that this provides templates from which sub-functions have been eliminated, and then re-introduces the effect of these eliminated sub-functions on a per-block basis. This gives opportunities for optimisation by allowing sub-functions to be coalesced or simply omitted where they are redundant. In particular, a number of address range checks may be merged into a single check.

One embodiment of the invention will now be described by way of example with reference to the accompanying drawings.

### Brief Description of the Drawings

Figure 1 is a block diagram showing the main data structures and processes involved in this embodiment.
Figure 2 is a flow chart of a process for forming templates from an existing interpreter code.
Figure 3 is a flow chart of a process for initialising the templates.
Figure 4 is a flow chart of a process for translating a block of source code, using the templates.

### Description of an Embodiment of the Invention

The present embodiment is concerned with a mechanism for translating instructions from a source instruction set into a target instruction set. For example, the source instruction set may be the ICL VME instruction set, and the target instruction set may be a microprocessor assembler language.

The ICL VME instruction set is complex, and each instruction may involve a number of sub-functions such as, for example:
■ calculating an operand address,
■ performing range checks on the operand address; for example, checking that the address of a stack operand is not greater than the current stack front,
■ fetching or storing an operand,
■ writing or reading an operand to or from a register,
■ clearing or setting an overflow register OV,
■ incrementing a program counter register PC by an amount dependent on the instruction length.

It is assumed that there exists a fully validated interpreter for translating all instructions in the source instruction set. This interpreter may be written either in a high-level language, as a set of macros, or in assembler language, with a defined sequence for each instruction in the source instruction set. Each of these interpreter sequences, in turn, includes a number of sub-sequences, for translating the sub-functions in the instruction. For example, an interpreter sequence may contain sub-sequences for calculating the operand address, performing range checks on the operand address, and so on.

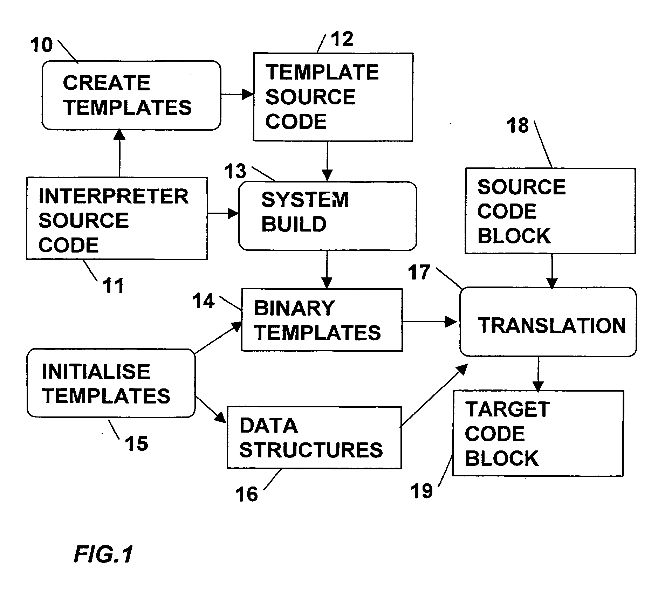

Referring to Figure 1, prior to system build time, a Create Templates process 10 is performed. This process takes the existing interpreter source code 11, and generates a set of template source code sequences 12, one for each instruction in the source instruction set. The template source code sequences at this stage are source code sequences derived from the interpreter source code. In the present embodiment of the invention, the process 10 is performed manually, but in other embodiments it could be performed automatically, by a suitable program.

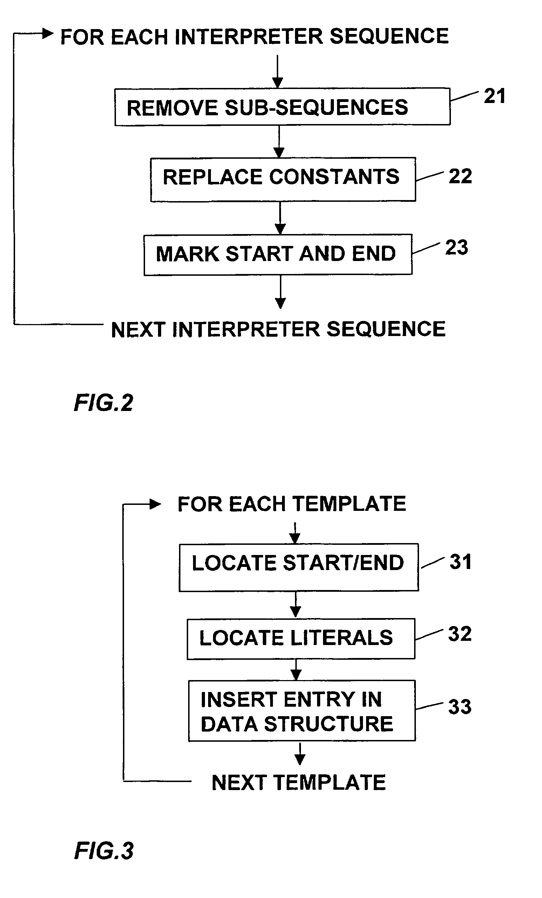

Figure 2 is a flowchart of the Create Templates process 10. In this process, the source interpreter code 11 is scanned, to identify the sequences corresponding to individual instructions in the source instruction set. For each sequence, the following actions are performed.
(Step 21) First, the interpreter sequence is copied to the template source code 12. The template source code is then scanned to detect sub-sequences representing certain predetermined common sub-functions, and these sub-functions are removed from the template code. In this example, the sub-functions that are removed include PC update, OV clearing, and operand address range checks.
   In the case where the interpreter code is macro-generated, the removal of the predetermined sub-functions is achieved by modifying the macros. For example, consider the case where the interpreter contains the following macros:
   ■ CHECK_VA(x,y) - check a virtual address x against a limit y.
   ■ CLEAROV() - clear the overflow register OV.
   ■ UPDATEPC(n) - add n to the program counter register PC.
      In this case, CHECK_VA(x,y) would be modified to always return "true" (if this check can be performed statically), while CLEAROV() and UPDATEPC(n) would be modified to do nothing.
(Step 22) Next, the template source code 12 is scanned, looking for constants that will be derived from literal values in the target instructions at translate (run) time. These constants are replaced with predetermined literal marker values.
(Step 23) Finally, the start and end of each template source code sequence are marked by planting suitable binary codes in the template source code 12.

Referring again to Figure 1, the resulting template source code sequences 12 are then compiled as part of the standard system build process 13, resulting in a set of binary templates 14.

At system initialisation, an Initialise Templates process 15 is performed. Referring to Figure 3, this process performs the following actions for each binary template 14 in turn.
(Step 31) First, the Initialise Templates process scans the binary template to locate the start/end of the binary template (using the binary codes planted at step 23 above). This information is added to a set of data structures 16 to enable the translator to locate the binary template.
(Step 32) Next, the binary template is scanned to locate the marker values that were inserted at step 22 above, and to locate all calls within the template.
(Step 33) For each marker value in the template, the Initialise Templates process inserts an entry (referred to herein as a "fix-up" entry) in the data structures 16. The fix-up entry identifies the location of the marker value and specifies the data type of the constant value that is to be inserted into the code at translate time (run time) to replace the marker value. Similarly, for each call in the template, the Initialise Templates process inserts a fix-up entry in the data structures 16, identifying the location of the call.

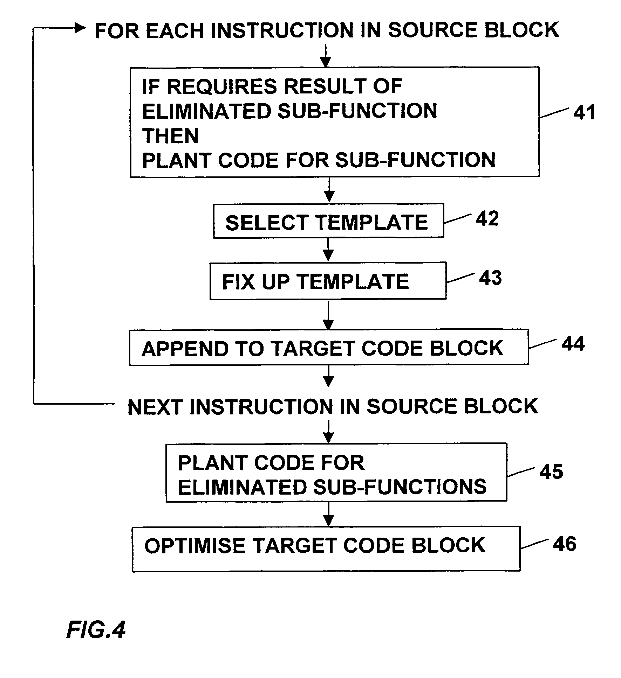

At run time, a Translation process 17 (Figure 1) is performed. This process takes source code blocks 18, and translates each block into a target code block 19, using the binary templates 14 and the data structures 16. Referring to Figure 4, the process 17 selects each instruction in the source code block 18 in turn, and performs the following actions on the currently selected instruction.
(Step 41) First, the Translation process determines whether the current instruction requires an operand that would have been generated by one of the eliminated sub-functions. If so, it plants code in the target code block 19, to perform the actions of the eliminated sub-sequence. For example, suppose the Translator procedure finds that the current instruction uses the value of the PC register, but one or more preceding instructions in the block have had their PC update sub-functions eliminated. In this case, the Translator procedure will plant code to bring the PC register up to date.
(Step 42) Next, the Translation process identifies the instruction type of the current instruction, and selects the binary template 14 corresponding to this instruction type from the data structure created in step 31.
(Step 43) The Translation process then looks up the data structures 16, to identify any fix-up entries for the template. In the case where a fix-up entry represents a constant, the process inserts the required constant. The constant is derived from the parameters of the current instruction, according to its specified data type. In the case where a fix-up entry represents a call, the process inserts the required information for the call.
(Step 44) The fixed-up template is appended to the output target code block 19.
(Step 45) After all the instructions in the source code block have been processed in this way, the Translation process scans the source code block 18 to determine the net effect of the eliminated sub-functions. It then plants code in the target code block 19, to ensure that this net effect is achieved.

In this step, the Translation process determines which of the instructions in the source code block require an operand address range check. It then plants code at the beginning of the target code block 19, to perform a combined range check, having the same net effect as all the eliminated range checks in the block.

For example, consider the following block of source code:

| | |
|---|---|
| N=5 | check 5 < SF-LNB |
| N=6 | check 6 < SF-LNB |
| N=7 | check 7 < SF-LNB |

(where SF denotes a stack front register and LNB denotes a local name base register). The sub-functions for these three range checks will be eliminated by the Create Templates process. The Translation process therefore plants a single merged range check, which checks SF-LNB against the maximum of the three values (5, 6, 7) :
7 < SF-LNB.

It can be seen that if this test passes, all three original tests must pass.

Now consider the following block of code:

| | |
|---|---|
| N=5 | check 5 < SF-LNB |
| SF=SF+5 | |
| N=11 | check 11 < SF-LNB |
| SF=SF-5 | |
| N=7 | check 7 < SF-LNB |

In this case the value of SF is modified during execution of the block, and hence a merged check based on the maximum of the three values (5,11,7) would fail.

The Translation process solves this problem by tracking the adjustment of SF, and replacing the checks as follows:

| | |
|---|---|
| N=5 | check 5 < SF-LNB |
| SF=SF+5 | |
| N=11 | check 11 < SF+5-LNB |
| SF=SF-5 | |
| N=7 | check 7 < SF+5-5-LNB |

This is simplified to become:

| | |
|---|---|
| N=5 | check 5 < SF-LNB |
| SF=SF+5 | |
| N=11 | check 6 < S-LNB |
| SF=SF-5 | |
| N=7 | check 7 < SF-LNB |

The translation process then plants a single check, based on the maximum of these new values i.e. (7 < SF-LNB). This approach works both for positive and negative adjustment of SF.

Also in step 45, the Translation process determines the amount by which each instruction in the source code block updates the PC register, and then plants a single instruction at the end of the target code block, to increment the PC register by the total of all these updates.
(Step 46) Finally, as an optional step, the Translation process may perform further optimisations on the target code block 19, using conventional optimisation techniques, such as register tracking to eliminate redundant register reads and writes.

In summary, it can be seen that the translation mechanism described above uses an existing interpreter to form templates for translating individual instructions. Because the interpreter is fully validated, the templates should also be error-free.

The efficiency of the generated code is improved by eliminating certain common sub-functions (such as "update PC") from the templates, and planting code in the target code block to restore the net effect of the eliminated sub-functions where necessary. Thus, these sub-functions are promoted from a per-instruction basis to a per-block basis.

### Some possible modifications

It will be appreciated that many modifications may be made to the system described above without departing from the scope of the present invention. For example, the choice of sub-functions to be eliminated may be varied, according to the particular source instruction set. Equally, no optimisation may be done at all.

In another possible modification, the template initialisation process could be performed as part of the system build. In other words, part of the build process would be to compile the source templates and then to scan the resulting object code to locate the necessary information.

## Claims

1. A computer-implemented method of translating an input block (18) of source code instructions into an output block (19) of target code instructions, using a plurality of templates (14), where each of the templates (14) implements a respective instruction in the source code instruction set, without implementing predetermined sub-functions within that instruction,
**characterised in that** the method includes:
(a) selecting an appropriate template for each instruction in the input block (18) and appending that template to the output block (19);
(b) analysing the input block (18) to determine the net effect of the non-implemented sub-functions in the templates (14) used in the output block (19); and
(c) planting code in the output block (19) to achieve this net effect.

2. A method according to Claim 1 wherein said non-implemented sub-functions include a plurality of address range checks, and wherein said step of planting code comprises planting code for performing a merged address range check equivalent to said plurality of address range checks.

3. A method according to Claim 2 including the step of modifying said merged address range check, to relate address range checks within the block to an initial value of a register on entry to the block, thereby ensuring that the check is still correct even if the value of said register changes during the execution of the block.

4. A computer system for translating an input block (18) of source code instructions into an output block (19) of target code instructions, using a plurality of templates (14), where each of the templates (14) implements a respective instruction in the source code instruction set, without implementing predetermined sub-functions within that instruction, **characterised in that** the system includes:
(a) means (17) for selecting an appropriate template for each instruction in the input block (18) and appending that template to the output block (19);
(b) means (17) for analysing the input block (18) to determine the net effect of the non-implemented sub-functions in the templates (14) used in the output block (19); and
(c) means (17) for planting code in the output block (19) to achieve this net effect.

5. A system according to Claim 4 wherein said non-implemented sub-functions include a plurality of address range checks, and wherein said means for planting code comprises means for planting code for performing a merged address range check equivalent to said plurality of address range checks.

6. A system according to Claim 4 or 5 further including means for determining, for each instruction in the input block, whether the instruction requires the result of a non-implemented sub-function and, if so, for planting code in the output block to supply that result.

7. An information carrier carrying a computer program for performing a method according to any of claims 1 to 3.

## Patentansprüche

1. Computerimplementiertes Verfahren zum Übersetzen eines Eingangsblocks (18) von Quellcodebefehlen in einen Ausgangsblock (19) von Zielcodebefehlen unter Verwendung einer Vielzahl von Schablonen (14), wobei jede der Schablonen (14) einen jeweiligen Befehl in dem Quellcode-Befehlssatz implementiert, ohne vorgegebene Teilfunktionen innerhalb dieses Befehls zu implementieren,
**dadurch gekennzeichnet, dass** das Verfahren einschließt:
a) Auswählen einer geeigneten Schablone für jeden Befehl in dem Eingangsblock (18) und Anhängen dieser Schablone an den Ausgangsblock (19);
b) Analysieren des Eingangsblocks (18), um den Gesamteffekt der nicht implementierten Teilfunktionen in den in dem Ausgangsblock (19) verwendeten Schablonen (14) zu bestimmen; und
c) Einsetzen von Code in den Ausgangsblock (19), um diesen Gesamteffekt zu erzielen.

2. Verfahren nach Anspruch 1, wobei die nicht implementierten Teilfunktionen eine Vielzahl von Adressbereichsprüfungen enthalten und der Schritt des Einsetzens von Code das Einsetzen von Code zum Durchführen einer integrierten Adressbereichsprüfung äquivalent zu der Vielzahl von Adressbereichsprüfungen umfasst.

3. Verfahren nach Anspruch 2, das den Schritt des Modifizierens der integrierten Adressbereichsprüfung einschließt, um Adressbereichsprüfungen innerhalb des Blocks auf einen Anfangswert eines Registers nach Eingang in den Block zu beziehen und so sicherzustellen, dass die Prüfung selbst dann noch richtig ist, wenn sich der Wert des Registers während der Ausführung des Blocks ändert.

4. Computersystem zum Übersetzen eines Eingangsblocks (18) von Quellcodebefehlen in einen Ausgangsblock (19) von Zielcodebefehlen unter Verwendung einer Vielzahl von Schablonen (14), wobei jede der Schablonen (14) einen jeweiligen Befehl in dem Quellcode-Befehlssatz implementiert, ohne vorgegebene Teilfunktionen innerhalb dieses Befehls zu implementieren,
**dadurch gekennzeichnet, dass** das System enthält:
(a) eine Einrichtung (17) zum Auswählen einer geeigneten Schablone für jeden Befehl in dem Eingangsblock (18) und zum Anhängen dieser Schablone an den Ausgangsblock (19);
(b) eine Einrichtung (17) zum Analysieren des Eingangsblocks (18), um den Gesamteffekt der nicht implementierten Teilfunktionen in den in dem Ausgangsblock (19) verwendeten Schablonen (14) zu bestimmen; und
(c) eine Einrichtung (17) zum Einsetzen von Code in den Ausgangsblock (19), um diesen Gesamteffekt zu erzielen.

5. System nach Anspruch 4, wobei die nicht implementierten Teilfunktionen eine Vielzahl von Adressbereichsprüfungen enthalten und die Einrichtung zum Einsetzen von Code eine Einrichtung zum Einsetzen von Code zum Durchführen einer integrierten Adressbereichsprüfung äquivalent zu der Vielzahl von Adressbereichsprüfungen umfasst.

6. System nach Anspruch 4 oder 5, das des Weiteren eine Einrichtung enthält, die für jeden Befehl in dem Eingangsblock bestimmt, ob der Befehl das Ergebnis einer nicht implementierten Teilfunktion erfordert, und, wenn dies zutrifft, Code in den Ausgangsblock einsetzt, um dieses Ergebnis bereitzustellen.

7. Informationsträger, der ein Computerprogramm zum Durchführen eines Verfahrens nach einem der Ansprüche 1 bis 3 trägt.

## Revendications

1. Procédé mis en oeuvre par ordinateur pour traduire un bloc d'entrée (18) d'instructions de code source en un bloc de sortie (19) d'instructions de code cible, en utilisant une pluralité de modèles (14), dans lequel chacun des modèles (14) met en oeuvre une instruction respective du jeu d'instructions de code source, sans mettre en oeuvre des sous-fonctions prédéterminées à l'intérieur de cette instruction,
**caractérisé en ce que** le procédé comprend les étapes consistant à:
(a) sélectionner un modèle approprié pour chaque instruction du bloc d'entrée (18) et ajouter ce modèle au bloc de sortie (19);
(b) analyser le bloc d'entrée (18) afin de déterminer l'effet net des sous-fonctions non mises en oeuvre dans les modèles (14) utilisés dans le bloc de sortie (19); et
(c) implanter du code dans le bloc de sortie (19) afin d'obtenir cet effet net.

2. Procédé selon la revendication 1, dans lequel lesdites sous-fonctions non mises en oeuvre comprenions une pluralité de vérifications de plage d'adresses, et dans lequel ladite étape d'implantation de code comprend le fait d'implanter du code en vue d'effectuer une vérification de plage d'adresses fusionnée équivalente à ladite pluralité de vérifications de plage d'adresses.

3. Procédé selon la revendication 2, comprenant l'étape consistant à modifier ladite vérification de plage d'adresses fusionnée, afin de lier des vérifications de plage d'adresses à l'intérieur du bloc à une valeur initiale d'un registre à l'entrée dans le bloc, pour garantir que la vérification est encore correcte même si la valeur dudit registre change au cours de l'exécution du bloc.

4. Système d'ordinateur servant à traduire un bloc d'entrée (18) d'instructions de code source en un bloc de sortie (19) d'instructions de code cible, en utilisant une pluralité de modèles (14), dans lequel chacun des modèles (14) met en oeuvre une instruction respective du jeu d'instructions du code source, sans mettre en oeuvre des sous-fonctions prédéterminées à l'intérieur de cette instruction,
**caractérisé en ce que** le système comprend:
(a) un moyen (17) pour sélectionner un modèle approprié pour chaque instruction du bloc d'entrée (18) et ajouter ce modèle au bloc de sortie (19);
(b) un moyen (17) pour analyser le bloc d'entrée (18) afin de déterminer l'effet net des sous-fonctions non mises en oeuvre dans les modèles (14) utilisés dans le bloc de sortie (19); et
d'obtenir cet effet net.

5. Système selon la revendication 4, dans lequel lesdites sous-fonctions non mises en oeuvre comprennent une pluralité de vérifications de plage d'adresses, et dans lequel ledit moyen pour implanter du code comprend un moyen pour implanter du code en vue d'effectuer une vérification de plage d'adresse fusionnée équivalente à ladite pluralité de vérifications de plage d'adresses.

6. Système selon la revendication 4 ou 5, comprenant en outre un moyen pour déterminer, pour chaque instruction du bloc d'entrée, si l'instruction requiert ou non le résultat d'une sous-fonction non mise en oeuvre, et si oui, pour implanter du code dans le bloc de sortie afin de fournir ce résultat.

7. Support d'information supportant un programme d'ordinateur agencé pour exécuter le procédé selon l'une quelconque des revendications 1 à 3.
